Europäisches Patentamt

European Patent Office

Office européen des brevets

(11) Publication number: **0 046 368**
**B1**

(12) EUROPEAN PATENT SPECIFICATION

(45) Date of publication of patent specification: 20.02.85

(21) Application number: **81303669.6**

(22) Date of filing: **12.08.81**

(51) Int. Cl.⁴: **B 23 K 35/365,** B 23 K 35/22

54 Coated electrode.

(30) Priority: **15.08.80 US 178497**

(43) Date of publication of application:
**24.02.82 Bulletin 82/08**

(45) Publication of the grant of the patent:
**20.02.85 Bulletin 85/08**

(84) Designated Contracting States:
**AT BE CH DE FR GB IT LI NL SE**

(56) References cited:
**AT-B- 247 102**
**AT-B- 342 382**
**AU-D-6 520 965**
**CH-A- 268 596**
**CH-A- 420 802**
**FR-A-1 349 390**

**DR. OTTO-ALBRECHT NEUMÜLLER "Römpps Chemie-Lexikon", 7th edition, part 3, 1973, FRANCKH'SCHE VERLAGSHANDLUNG, Stuttgart**

(73) Proprietor: **HUNTINGTON ALLOYS, INC.**
**Huntington West Virginia 25720 (US)**

(72) Inventor: **Mesick, Jack Hudson**
**6217 Rosiland Road**
**Huntington West Virginia 25705 (US)**
Inventor: **Shoemaker, Lewis Edward**
**218 Forest View Drive**
**Huntington West Virginia 25705 (US)**
Inventor: **Freeman, Richard Franklin**
**125 Honeysuckle Lane**
**Huntington West Virginia 25701 (US)**

(74) Representative: **Lockwood, Barbara Ann et al**
**Thames House (Fifth Floor) Millbank**
**London SW1P 4QF (GB)**

Courier Press, Leamington Spa, England.

## Description

The present invention relates to a coated welding electrode for welding nickel-based alloys.

UK Patent 1 481 831 discloses flux compositions which can be used in conjunction with a wide range of core wires falling within the range up to 1% carbon, up to 15% manganese, up to 50% chromium, up to 5% titanium, up to 5% aluminium, up to 70% iron, up to 90% copper, up to 10% molybdenum, up to 6% niobium, up to 1% tantalum the balance apart from impurities being nickel. Such welding electrodes give weld deposits having good corrosion resistance and are useful for welds in corrosion-resistant piping systems. They have not proved successful for welding Inconel® alloy 617, an alloy which exhibits excellent high temperature characteristics, high resistance to stresses and shock at elevated temperature and high resistance to corrosion. Inconel alloy 617 is disclosed and claimed in UK Patent 1 336 409, and is useful in high temperature environments such as nuclear reactors and combustion chambers for gas turbine engines, and is formable and weldable by conventional techniques.

In order to deposit a weldment exhibiting similar tensile, stress rupture and oxidation properties to the base alloys which are being welded together it is conventional to use a welding electrode having a combination of core wire and flux such as to cause the deposition of the same alloy composition as one of the parts to be welded. This may necessitate the development of a different alloy for use as the core wire of the welding electrode, together with the difficulties normally associated with the production and introduction of a new alloy. A welding electrode was therefore tested in which standard production Inconel alloy 617 was employed as the core wire, in combination with a flux which would cause an exact duplication of the alloy when deposited. However this combination did not produce defect free weldments when the electrode was used out of position. Close examination of the resulting deposits frequently disclosed evidence of undesirable microfissuring.

The present invention is based on the discovery that a welding electrode having a deposit which exhibits similar tensile, stress rupture and oxidation properties as the wrought alloy product and which exhibits good operability and produces sound weldments can be produced using standard production Inconel alloy 617 as the core wire.

According to the present invention there is provided a coated welding electrode having a core wire consisting of from 20 to 24% chromium, from 0.8 to 1.5% aluminium, from 9.5 to 20% cobalt, from 7 to 12% molybdenum, up to 0.15% carbon, 0 to 0.6% titanium, 0 to 0.1% boron, 0 to 0.1% zirconium, 0 to 0.05% magnesium the balance apart from impurities and incidental elements being nickel; and a flux coating disposed about the electrode including 10 to 50% calcium carbonate, 10 to 50% cryolite, 5 to 35% titania, up to 30% silica, up to 15% wollastonite, 5 to 20% chromium, 2 to 15% manganese, 0 to 8% molybdenum, 0 to 2% nickel-carbon composite, 0 to 8% colloidal clay, 0 to 12% high melting oxide, 0 to 8% niobium and/or tantalum and a silicate type binder. All percentages herein are by weight.

By incidental elements and impurities as used herein is meant any of a class of incidental ingredients, and impurities, together with their ranges of proportions, which are well known in the production of nickel-based alloys such as Inconel® alloy 617. As stated in UK Patent 1 336 409, "elements such as sulphur, phosphorus and copper should be as low as possible and should not exceed 0.015% sulphur, 0.03% phosphorus and 1% copper. The iron content of the alloys should also be limited. For the best stress rupture properties, particularly at 1093°C it should not exceed 5%, and preferably does not exceed 2%." "Other impurities which may be present in small amounts include silicon and manganese."

The nominal composition of Inconel alloy 617, and the preferred compositions for use as the core wire in the present invention is given in Table 1.

TABLE 1
(% by weight)

| Nickel | 52.0 | Iron | 1.5 |
|---|---|---|---|
| Chromium | 22.0 | Manganese | 0.5 |
| Cobalt | 12.5 | Silicon | 0.5 |
| Molybdenum | 9.0 | Sulphur | 0.008 |
| Aluminium | 1.2 | Titanium | 0.3 |
| Carbon | 0.07 | Copper | 0.2 |

The percentages of manganese and niobium in the flux have been found to be important, and are preferably adjusted within the range to reflect the diameter of the core wire. Thus although there may be no deliberate addition of niobium to the flux coating on comparatively thick electrodes (e.g. 0.40 cm and 0.48 cm diameter i.e. 5/32 inch and 3/16 inch respectively), it is essential, together with higher levels of manganese, in smaller diameter electrodes (e.g. 0.24 cm and 0.32 cm diameter i.e. 3/32 inch and 1/8 inch respectively). Thus it is necessary to use dissimilar flux formulations according to whether the electrode has a large or small diameter. The niobium can be replaced partly or wholly by tantalum. In fact most commercial sources of niobium do contain tantalum.

Although Inconel® alloy 617 derives much of its excellent oxidation resistance from its aluminium content of about 1%, very little of this aluminium transfers across the welding arc in shielded metal arc welding. Since it is impractical to add aluminium deposits via the electrode coating, weld deposits of the present electrode normally contain less than 0.25% aluminium. It would be expected that because of this low aluminium content the oxidation resistance of the weld deposits would be less than that of the wrought alloy. However it has been found that the use of chromium, manganese and niobium, according to the electrode diameter, produces a weldment having an oxidation resistance of a similar order to that of Inconel® alloy 617. Moreover by modifying the nickel-carbon composition of the flux, the stress rupture characteristics of the weld deposit have also been improved.

A silicate type binder is used with the flux composition to provide a durable and hard coating after drying and baking. This silicate type binder may be a solution of sodium silicate and/or potassium silicate. A preferred binder formulation is given in Table 2.

TABLE 2
Binder formulation

| Ingredient | Range | |
| --- | --- | --- |
| | Broad (%) | Preferred (%) |
| Sodium silicate | 40—98 | 95 |
| Potassium silicate | 0—50 | |
| Lithium silicate | 0—4 | 4 |
| Water | 0—6 | 1 |

In preparing the flux coating from the dry ingredients and binder, the binder is added to the mixture of dry ingredients, together with additional water as needed to obtain a consistency suitable for extrusion on the core wire. The flux coating can be applied to the core wire in any suitable manner, e.g. by extrusion process and then dried on the wire surface by suitable drying and/or baking. This results in a hard adherent coating of high mechanical strength relatively free from impairment under normal handling conditions. A satisfactory drying or baking treatment of the flux and binder mixture comprises raising the temperature gradually up to about 316°C, and holding at that temperature for about 2 hours.

A flux coating formulation is shown in Table 3.

# 0 046 368

## TABLE 3
### Flux coating formulation

| Ingredient | Range | |
| --- | --- | --- |
| | Broad (%) | Preferred (%) |
| Calcium carbonate | 10—50 | 30 |
| Cryolite | 10—50 | 30 |
| Titania | 5—35 | 10 |
| Silica | 0—30 | 4 |
| Wollastonite | 0—15 | 4 |
| *Chromium metal | 5—20 | 10** |
| *Manganese metal | 2—15 | 3** |
| *Molybdenum metal | 0—8 | 4** |
| Nickel-carbon composite | 0—2 | 1 |
| Collodial clays & extrusion aids | 0—8 | 4 |
| High melting oxides (e.g. MgO or $ZrO_2$) | 0—12 | 4 |
| *Niobium metal | 0—8 | 4 |

*May be added as pure metals or in ferro-alloy form.
**Depends on form of material used. Number given is for pure metal.

The coated welding electrode of the present invention produces sound ductile welds having substantial freedom from hot cracking and microfissuring. The present electrode may be used to produce satisfactory welds in joining or overlaying a variety of metals, either similar or dissimilar, the electrode having improved arc stability and good slag characteristics. The use of sufficient calcium carbonate in the flux keeps the carbon content of the weld low, and aids reduction of weld porosity and hot weld cracking. The flux also contains a binder material which produces a flux coating of high mechanical strength and a coating capable of tough handling without cracking and chipping.

Some examples will now be given.

Table 4 gives chemical analyses of deposits of four sizes of welding electrodes in accordance with the present invention. It will be observed that the larger and smaller sizes differ in respect of the levels of manganese (and/or tantalum) present and as well as their iron content. This latter is due to additions having been made in the form of ferroniobium. Otherwise the composition of the deposits are quite similar.

**0 046 368**

TABLE 4
Average chemical analysis—welding electrode deposit (in weight percent)

| Element | | 3/32" (.24 cm) and 1/8" (.32 cm) | 5/32" (.40 cm) and 3/16" (.48 cm) |
|---|---|---|---|
| Carbon | (C) | .1 | .1 |
| Manganese | (Mn) | 1.42 | .64 |
| Iron | (Fe) | 1.16 | .87 |
| Sulphur | (S) | .005 | .004 |
| Silicon | (Si) | .5 | .47 |
| Copper | (Cu) | .05 | .05 |
| Nickel | (Ni) | Bal | Bal |
| Chromium | (Cr) | 23.1 | 23.20 |
| Aluminium | (Al) | .21 | .24 |
| Titanium | (Ti) | .09 | .13 |
| Magnesium | (Mg) | <.001 | <.001 |
| Cobalt | (Co) | 11.47 | 11.73 |
| Molybdenum | (Mo) | 9.24 | 9.32 |
| Niobium-tantalum | (Nb+Ta) | .52 | .02 |
| Boron | (B) | <.002 | .001 |
| Phosphorous | (P) | .005 | .004 |

Tensile results from longitudinal, all weld-metal specimens of deposits of the two formulations are presented in Table 5. It will be observed that there is little difference in properties between the deposits of the two formulations.

5

TABLE 5
Welding electrode 3/32″ (.24 cm) & 1/8″ (.32 cm) diameters; all-weld-metal specimens

| Test temperature °C | Tensile strength MPa | Yield strength MPa | Elongation % | Reduction of area % |
|---|---|---|---|---|
| Room temperature | 823 | 501 | 34 | 26.8 |
| Room temperature | 814 | 517 | 35 | 27 |
| Room temperature | 818 | 508 | 34 | 28 |
| Room temperature | 827 | 508 | 37 | 38 |
| 538 | 636 | 382 | 38.3 | 45.9 |
| 649 | 592 | 356 | 34.9 | 26.1 |
| 760 | 498 | 380 | 33.6 | 41.3 |
| 871 | 261 | 252 | 36.6 | 38.9 |
| 982 | 159 | 157 | 26.4 | 28.8 |
| 1093 | 87.6 | 87.6 | 12.8 | 23.3 |

Welding electrode 5/32″ (.40 cm) & 3/16″ (.48 cm) diameters; all-weld metal specimens

| Test temperature °C | Tensile strength MPa | Yield strength MPa | Elongation % | Reduction of area % |
|---|---|---|---|---|
| Room temperature | 805 | 500 | 40 | 39.8 |
| Room temperature | 818 | 503 | 39 | 35.7 |
| 538 | 635 | 392 | 40.0 | 44 |
| 649 | 616 | 388 | 38.0 | 45 |
| 760 | 518 | 405 | 23.6 | 19 |
| 871 | 314 | 285 | 28.0 | 31 |
| 982 | 170 | 161 | 33.0 | 36 |
| 1093 | 114 | 114 | 13.5 | 12.2 |

Results of stress rupture tests from the two formulations are presented in Table 6. As before, no consistent differences between the two formulations are evident.

**0 046 368**

TABLE 6

Stress rupture data welding electrode 3/32″ (.24 cm) & 1/8″ (.32 cm) diameters; all-weld metal specimens

| Test temp.<br>°C | Stress<br>MPa | Rupture life<br>hrs | Elongation<br>% | Reduction of area<br>% |
|---|---|---|---|---|
| 649 | 400 | 41.7 | 16.2 | 17.0 |
|  | 345 | 107.7 | 11.3 | 23.8 |
| 760 | 207 | 21.0 | 15.2 | 18.3 |
|  | 165 | 81.8 | 0.2 | 10.7 |
| 871 | 89.6 | 177.1 | 17.5 | 21.0 |
|  | 89.6 | 170.1 | 11.5 | 16.0 |
|  | 89.6 | 166.9 | 6.5 | 14.0 |
|  | 66.9 | 1036.3 | 9.3 | 13.8 |
|  | 66.2 | 1137.2 | 5.8 | 8.3 |
| 982 | 40.7 | 143.1 | 3.9 | 10.5 |
|  | 29.6 | 498.8 | 7.5 | 7.5 |
| 1000 | 20.7 | 651.8 | 11.7 | 7.0 |
|  | 34.5 | 125.8 | 10.9 | 0.8 |
|  | 34.5 | 130.2 | 5.4 | 4.4 |
| 1093 | 18.6 | 42.9 | 7.3 | 2.5 |
|  | 12.4 | 108.2 | 8.9 | 1.0 |

Welding electrode 5/32″ (.41 cm) & 3/16″ (.48 cm) diameters; all-weld-metal specimens

| Test temp.<br>°C | Stress<br>MPa | Rupture life<br>hrs | Elongation<br>% | Reduction of area<br>% |
|---|---|---|---|---|
| 649 | 400 | 19.5 | 10.5 | 19.5 |
|  | 345 | 59.8 | 7.5 | 8.5 |
|  | 324 | 108.6 | 6.6 | 5.0 |
|  | 290 | 211.4 | 7.1 | 8.0 |
| 760 | 206 | 24.0 | 11.6 | 7.0 |
|  | 165 | 95.3 | 10.1 | 14.5 |
|  | 152 | 148.8 | 7.4 | 7.0 |
|  | 124 | 594.0 | 2.6 | 2.5 |
| 871 | 89.6 | 131.9 | 4.7 | 6.0 |
|  | 89.6 | 165.3 | 5.4 | 2.3 |
|  | 66.9 | 803.1 | 3.7 | 7.6 |
|  | 58.6 | 824.4 | 10.7 | 7.0 |
| 982 | 40.7 | 75.2 | 5.7 | 3.3 |
|  | 29.6 | 324.3 | 6.3 | 3.0 |
|  | 24.8 | 509.0 | 6.1 | 1.5 |
|  | 17.2 | 1602.1 | 5.8 | 0.9 |
| 1000 | 20.7 | 406.1 | 9.0 | 0.5 |
|  | 34.5 | 94.8 | 2.7 | 3.0 |
| 1093 | 18.6 | 28.8 | 7.4 | 2.5 |
|  | 12.4 | 69.5 | 0.8 | 0.1 |
|  | 10.3 | 138.6 | 5.0 | 1.5 |
|  | 6.89 | 354.8 | 9.6 | 1.5 |

The rupture strength of the electrode is adequate for most applications although stress to rupture of the electrode is slightly less than that of the base metal at all test temperatures except 871°C. Joint efficiencies are presented in Table 7.

7

**0 046 368**

### TABLE 7
Calculation of joint efficiency

Stress to rupture in 1000 hrs

| Temp. °C | Welding electrode MPa | Inconel alloy 617 MPa | Joint efficiency weld in Inconel alloy 617 |
|---|---|---|---|
| 649 | 276 | 331 | 83 |
| 760 | 121 | 152 | 80 |
| 871 | 59.3 | 57.9 | 102 |
| 982 | 23.4 | 24.8 | 94 |
| 1093 | 4.69 | 10.3 | 45 |

The stability of the deposit is shown in Table 8. A slight loss of ductility is shown but this is not such as to render the weld unserviceable.

### TABLE 8
Stability data room temperature impact strength (CVN) after exposure to various elevated temperatures

Average impact strength

| | | Weld deposit | | Base metal |
|---|---|---|---|---|
| Exposure temperature °C | Exposure time hrs | Small $\phi$* electrode J | Large $\phi$* electrode J | Inconel alloy 617 J |
| —As welded— | | 53 | 66 | 254 |
| 649 | 500 | 28 | 37 | 66 |
| | 1000 | 27 | 33 | 54 |
| | 2000 | 23 | 27 | 58 |
| 760 | 500 | 22 | 26 | 87 |
| | 1000 | 20 | 23 | 83 |
| | 2000 | 20 | 23 | 75 |
| 885 | 500 | 20 | 31 | 102 |
| | 1000 | 21 | 24 | 88 |
| 987 | 500 | 27 | 28 | N/A |

*Small diameters—3/32" & 1/8" (.24 & .32 cm)
*Large diameters—5/32" & 3/16" (.40 & .48 cm)

Physical characteristics of the electrodes are presented in Table 9. The deposition efficiency values were calculated as follows:

$$\text{Deposition efficiency} = \frac{\text{Weight of metal deposited from 1 electrode}}{\text{Weight of 1 electrode}} \times 100$$

where the "Weight of Metal Deposited" is defined as the weight of the deposit (with slag removed) from one electrode which was burned to a 5.08 cm stub. Thus, it is seen that from 4.5 kg of 5/32-inch (.40 cm) diameter electrodes, a welder will deposit approximately 2.9 kg of weld metal.

8

TABLE 9
Physical characteristics of the electrode

| Diameter | 3/32" (.24 cm) | 1/8" (.32 cm) | 5/32" (.40 cm) | 3/16" (.48 cm) |
|---|---|---|---|---|
| Length | 22.9 cm | 30.5 cm | 35.6 cm | 35.6 cm |
| No. electrodes/kg | 90 | 35 | 20 | 15.4 |
| Die size | .37 cm | .50 cm | .60 cm | .69 cm |
| *Deposition efficiency | 66 | 63 | 65 | 67 |
| Electrode coating % | 24.5 | 29.0 | 24.5 | 21.3 |

*Calculated with 5.08 cm stub.

The recommended current ranges for the electrodes are presented in Table 10. These ranges were determined to be "optimum". Operating the electrodes below the minimum results in arc instability, poor wetting and trapped slag. Above the maximum average the welder may experience overheating, loss of arc stability and arc force, porosity and cracking.

TABLE 10
Current ranges welding electrode

| Electrode diameter in. (cm) | Minimum* (amps) | Maximum* (amps) |
|---|---|---|
| 3/32 (.24) | 40 | 65 |
| 1/8 (.32) | 60 | 95 |
| 5/32 (.40) | 90 | 130 |
| 3/16 (.48) | 120 | 175 |

*Lowest amperage at which the electrode could be used with a reasonable amount of arc stability.
**Highest amperage at which the entire electrode (5.08 cm stub) could be used without overheating and loss of stability.

## Claims

1. A coated welding electrode having a core wire consisting of from 20% to 24% chromium, from 0.8% to 1.5% aluminium, from 9.5% to 20% cobalt, from 7% to 12% molybdenum, up to 0.15% carbon, 0% to 0.6% titanium, 0% to 0.1% boron, 0% to 0.1% zirconium, 0% to 0.05% magnesium the balance apart from impurities and incidental elements being nickel and a flux coating disposed about the electrode including 10% to 50% calcium carbonate, 10% to 50% cryolite, 5% to 35% titania, up to 30% silica, up to 15% wollastonite, 5% to 20% chromium, 2% to 15% manganese, 0% to 8% molybdenum, 0% to 2% nickel-carbon composite, 0% to 8% colloidal clay, 0% to 12% high melting oxide, 0% to 8% niobium and/or tantalum and a silicate type binder.

2. An electrode as claimed in claim 1 in which the core wire has the nominal composition 22% chromium, 12.5% cobalt, 9% molybdenum, 1.2% aluminium, 0.07% carbon, 1.5% iron, 0.5% silicon, 0.5% manganese, 0.008% sulphur, 0.3% titanium, 0.2% copper, the balance apart from impurities being nickel.

3. An electrode as claimed in claim 1 or claim 2 in which the binder comprises 40—98% sodium silicate, up to 50% potassium silicate, up to 4% lithium silicate and up to 6% water.

4. An electrode as claimed in claim 3 in which the binder comprises 95% sodium silicate, 4% lithium silicate and 1% water.

5. A process for welding nickel-based alloys in which at least one of the parts to be welded is Inconel® alloy 617 comprising using an electrode as claimed in any preceding claim having a diameter of less than or equal to 0.32 cm whereby a weldment having the nominal composition 0.1% carbon, 1.4% manganese, 1.2% iron, 0.005% sulphur, 0.5% silicon, 0.05% copper, 23.1% chromium, 0.2% aluminium, 0.09% titanium, up to 0.001% magnesium, 11.5% cobalt, 9.2% molybdenum, 0.5% niobium/tantalum, up to 0.002% boron, 0.005% phosphorus and the balance nickel is deposited.

6. A process for welding nickel-based alloys in which at least one of the parts to be welded is Inconel® alloy 617 comprising using an electrode as claimed in any one of claims 1 to 4 having a diameter of greater than 0.32 cm whereby a weldment having the nominal composition 0.1% carbon, 0.6% manganese, 0.8% iron, 0.004% sulphur, 0.5% silicon, 0.05% copper, 23.2% chromium, 0.2% aluminium, 0.1% titanium, up to 0.001% magnesium, 11.7% cobalt, 9.3% molybdenum, 0.02% niobium/tantalum, 0.001% boron, 0.005% phosphorus and the balance nickel is deposited.

## Revendications

1. Electrode de soudure enrobée ayant un fil d'âme constitué de 20 à 24% de chrome, de 0,8 à 1,5% d'aluminium, de 9,5 à 20% de cobalt, de 7 à 12% de molybdène, jusqu'à 0,15% de carbone, de 0% à 0,6% de titane, de 0% à 0,1% de bore, de 0% à 0,1% de zirconium, de 0% à 0,05% de magnésium, le complément étant, outre les impuretés et les éléments accidentels, du nickel; et un enrobage de fondant disposé autour de l'électrode comprenant de 10 à 50% de carbonate de calcium, 10 à 50% de cryolithe, 5 à 35% d'oxyde de titane, jusqu'à 30% de silice, jusqu'à 15% de wollastonite, 5 à 20% de chrome, 2 à 15% de manganèse, 0% à 8% de molybdène, 0% à 2% de composite nickel-carbone, 0% à 8% d'argile colloïdale, 0% à 12% d'oxyde à point de fusion élevé, 0% à 8% de niobium et/ou de tantale et un liant du type silicate.

2. Electrode selon la revendication 1, dans laquelle le fil d'âme a la composition nominale 22% de chrome, 12,5% de cobalt, 9% de molybdène, 1,2% d'aluminium, 0,07% de carbone, 1,5% de fer, 0,5% de silicium, 0,5% de manganèse, 0,008% de soufre, 0,3% de titane, 0,2% de cuivre, le complément, outre les impuretés, étant du nickel.

3. Electrode selon la revendication 1 ou la revendication 2, dans laquelle le liant comprend 40—98% de silicate de sodium, jusqu'à 50% de silicate de potassium, jusqu'à 4% de silicate de lithium et jusqu'à 6% d'eau.

4. Electrode selon la revendication 3, dans laquelle le liant comprend 95% de silicate de sodium, 4% de silicate de lithium et 1% d'eau.

5. Procédé de soudure d'alliages à base de nickel dans lequel au moins une des pièces à souder est en alliage Inconel® 617 comportant l'utilisation d'une électrode selon l'une quelconque des revendications précédentes, ayant un diamètre inférieur ou égal à 0,32 cm, dans lequel un cordon de soudure ayant la composition nominale de 0,1% de carbone, 1,4% de manganèse, 1,2% de fer, 0,005% de soufre, 0,5% de silicium, 0,05% de cuivre, 23,1% de chrome, 0,2% d'aluminium, 0,09% de titane, jusqu'à 0,001% de magnésium, 11,5% de cobalt, 9,2% de molybdène, 0,5% de niobium/tantale, jusqu'à 0,002% de bore, 0,005% de phosphore et le complément étant du nickel, est déposé.

6. Procédé de soudure d'alliages à base de nickel dans lequel au moins une des pièces à souder est en alliage Inconel® 617 comportant l'utilisation d'une électrode selon l'une quelconque des revendications 1 à 4, ayant un diamètre supérieur à 0,32 cm, dans lequel un cordon de soudure ayant la composition nominale de 0,1% de carbone, 0,6% de manganèse, 0,8% de fer, 0,004% de soufre, 0,5% de silicium, 0,05% de cuivre, 23,2% de chrome, 0,2% d'aluminium, 0,1% de titane, jusqu'à 0,001% de magnésium, 11,7% de cobalt, 9,3% de molybdène, 0,02% de niobium/tantale, 0,001% de bore, 0,005% de phosphore et le complément étant du nickel, est déposé.

## Patentansprüche

1. Eine umhüllte Schweißelectrode mit einem Kerndraht bestehend aus 20 bis 24% Chrom, 0,8 bis 1,5% Aluminium, 9,5 bis 20% Kobalt, 7 bis 12% Molybdän, bis zu 0,15% Kohlenstoff, 0 bis 0,6% Titan, 0 bis 0,1% Bor, 0 bis 0,1% Zirkon, 0 bis 0,05% Magnesium, Rest—außer Verunreinigungen und Eisenbegleitelementen—Nickel, sowie einer Flußmittelumhüllung um die Elektrode mit 10 bis 50% Kalziumkarbonat, 10 bis 50% Kryolith, 5 bis 35% Titanerde, bis zu 30% Siliziumdioxid, bis zu 15% Wollastonit, 5 bis 20% Chrom, 2 bis 15% Mangan, 0 bis 8% Molybdän, 0 bis 2% zusammengesetzter Nickel-Kohlenstoff, 0 bis 8% kolloidalem Ton, 0 bis 12% hochschmelzendem Oxid, 0 bis 8% Niob und/oder Tantal, und einem silikatischem Bindemittel.

2. Eine Elektrode nach Anspruch 1, wobei sich der Kerndraht nominal zusammensetzt aus 22% Chrom, 12,5% Kobalt, 9% Molybdän, 1,2% Aluminium, 0,07% Kohlenstoff, 1,5% Eisen, 0,5% Silizium, 0,5% Mangan, 0,008% Schwefel, 0,3% Titan, 0,2% Kupfer, Rest—außer Verunreinigungen—Nickel.

3. Eine Elektrode nach Anspruch 1 oder 2, wobei das Bindemittel 40 bis 98% Natriumsilikat, bis zu 50% Kaliumtrioxosilikat, bis zu 4% Lithiumsilikat und bis zu 6% Wasser enthält.

4. Eine Elektrode nach Anspruch 3, wobei das Bindemittel 95% Natriumsilikat, 4% Lithiumsilikat und 1% Wasser enthält.

5. Ein Verfahren zum Schweißen von Nickelbasislegierungen, wobei mindestens eines der zu schweißenden Teile aus Inconel® alloy 617 besteht, und zwar unter Verwendung einer Elektrode nach einem der vorgenannten Ansprüche mit einem Durchmesser von bzw. weniger als 0,32 cm, womit ein Schweißgut mit der nominalen Zusammensetzung von 0,1% Kohlenstoff, 1,4% Mangan, 1,2% Eisen, 0,005% Schwefel, 0,5% Silizium, 0,05% Kupfer, 23,1% Chrom, 0,2% Aluminium, 0,09% Titan, bis zu 0,001% Magnesium, 11,5% Kobalt, 9,2% Molybdän, 0,5% Niob/Taltal, bis zu 0,002% Bor, 0,005% Phosphor, Rest Nickel, aufgebracht wird.

6. Ein Verfahren zum Schweißen von Nickelbasislegierungen, wobei mindestens eines der zu schweißenden Teile aus Inconel® alloy 617 besteht, und zwar unter Verwendung einer Elektrode nach einem der Ansprüche 1 bis 4 mit einem Durchmesser größer als 0,32 cm, womit ein Schweißgut mit der nominalen Zusammensetzung von 0,1% Kohlenstoff, 0,6% Mangan, 0,8% Eisen, 0,004% Schwefel, 0,5% Silizium, 0,05% Kupfer, 23,2% Chrom, 0,2% Aluminium, 0,1% Titan, bis zu 0,001% Magnesium, 11,7% Kobalt, 9,3% Molybdän, 0,02% Niob/Tantal, 0,001% Bor, 0,005% Phosphor, Rest Nickel, aufgebracht wird.